# EUROPEAN PATENT APPLICATION

(11) **EP 1 275 954 A2**
(43) Date of publication of application: **15.01.2003**
(21) Application number: 02015523.0
(22) Date of filing: 10.07.2002
(51) Int. Cl.: G01N 21/64

(54) **Fluorescence reading apparatus**

(30) Priority: 11.07.2001 JP 2001211200
(71) Applicant: Hitachi Software Engineering Co., Ltd., Yokohama-shi, Kanagawa 231-8475 (JP)
(72) Inventor: Kuwabata, Susumu, Dep. of Materials Chemistry, Osaka 565-0871 (JP); Fukusaki, Eiichiro, Dep. of Biotechnology, Osaka 565-0871 (JP); Nakao, Motonao, Hitachi Software Eng. Co., Ltd., Kanagawa 231-8475 (JP)
(74) Representative: Liesegang, Roland, Dr.-Ing.

(57) **Abstract**

A compact and low-cost fluorescence reading apparatus capable of detecting multiple wavelengths is provided. The apparatus employs a semiconductor nanoparticle (201) as a fluorescent substance so as to enable a plurality of kinds of fluorescent substances to be simultaneously excited by a single excitation light source (220). Alternatively, the plurality of kinds of fluorescent substances are simultaneously excited by the application of a voltage.

## Description

### BACKGROUND OF THE INVENTION

### 1. Technical Field

The present invention relates to a fluorescence reading apparatus suitable for reading fluorescence emitted by a sample which is fluorescence-labeled in a two-dimensionally distributed manner.

### 2. Background Art

Various methods are known which utilize fluorescence for the analysis or examination of samples. In one example, a biological sample such as DNA or protein labeled with a fluorescent substance as a marker is separated by electrolysis and detected by utilizing fluorescence. In another example, a target DNA labeled with a fluorescent substance is poured onto a biochip comprising a substrate on which a plurality of kinds of probe DNAs are arranged as minute spots at high density, and fluorescence from the fluorescent substance is read to determine the presence or absence of hybridization between the target DNA and the probe DNA. In these methods, a fluorescence reading apparatus is used for exciting the labeling fluorescent substance and reading fluorescence emitted by the fluorescent substance, so that results can be read.

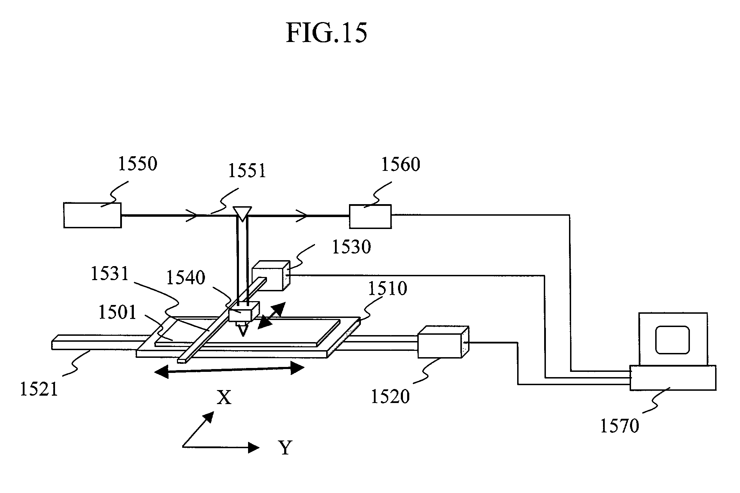

FIG. 15 schematically shows a fluorescence reading apparatus according to the prior art. The fluorescence reading apparatus is used for reading a labeling fluorescent substance two-dimensionally distributed on the surface of a substrate 1501. The substrate 1501 is retained on a stage 1510 which is transported in a Y-direction in a stepwise manner by a Y-direction drive motor 1520. A read head 1540 is positioned above the substrate 1501 and continuously driven in an X-direction by an X-direction drive motor 1530. A laser light source 1550 produces laser light 1551 which is irradiated onto the substrate 1501 via the read head 1540. Fluorescence emitted by the substrate 1501 is detected by a photomultiplier tube 1560 via the read head 1540. When reading the substrate 1501, the read head 1540 is transported continuously along an X-axis rail 1531 in the X-direction by the X-direction drive motor 1530 under the control of a control computer 1570, while the stage 1510 retaining the substrate 1501 is transported in a stepwise manner along a Y-axis rail 1521 in the Y-direction also under the control of the control computer 1570.

When irradiated with excitation light, a fluorescent substance emits fluorescence in the long wavelength side of an excitation wavelength. However, in most of the conventional fluorescent substances, when the fluorescent wavelengths differ, the excitation wavelengths also differ. For example, Cy3, which is often used as a labeling fluorescent substance, has an excitation wavelength of 552 nm and a fluorescent wavelength of 565 nm. Cy5 has an excitation wavelength of 650 nm and a fluorescent wavelength of 667 nm. Likewise, FITC Fluorescein has an excitation wavelength of 490 nm and a fluorescent wavelength of 520 nm, and Texas Red has an excitation wavelength of 580 nm and a fluorescent wavelength of 602 nm. When a plurality of fluorescent substances are used, in order to improve the detection sensitivity by raising the fluorescence excitation efficiency of all of the fluorescent substances, it is necessary to excite the individual fluorescent substances with individually appropriate excitation wavelengths. Since the ordinary laser light sources used as a fluorescence excitation light source produce monochromatic light, if a fluorescence reading apparatus capable of efficiently detecting a sample containing a plurality of fluorescent substances is to be manufactured, the apparatus would have to be provided with a plurality of laser light sources, resulting in an increase in the apparatus size and cost.

In view of these problems of the prior art, it is an object of the present invention to provide a compact and low-cost fluorescence reading apparatus which is capable of efficiently detecting a plurality of fluorescent substances without requiring a plurality of excitation light sources.

### SUMMARY OF THE INVENTION

In order to achieve the above object, the present invention employs a semiconductor nanoparticle as a fluorescent substance so that the fluorescence reading apparatus can be simplified by taking advantage of the emission characteristics of the semiconductor nanoparticle.

While there are many kinds of semiconductors, they can be generally divided into, e.g., elementary semiconductors (such as, e.g., silicon and germanium), oxide semiconductors (such as, e.g., cuprous oxide and zinc oxide), sulfide semiconductors (such as, e.g., cadmium sulfide, sodium sulfide, and zinc sulfide), and compound semiconductors (such as, e.g., gallium arsenide and indium). The semiconductor nanoparticle is a nano-level fine particle of a semiconductor material such as CdS, ZnS or CdSe, for example. There are also some semiconductor nanoparticles that have a core-shell structure in which a core portion made up of CdSe, for example, is enclosed by ZnS.

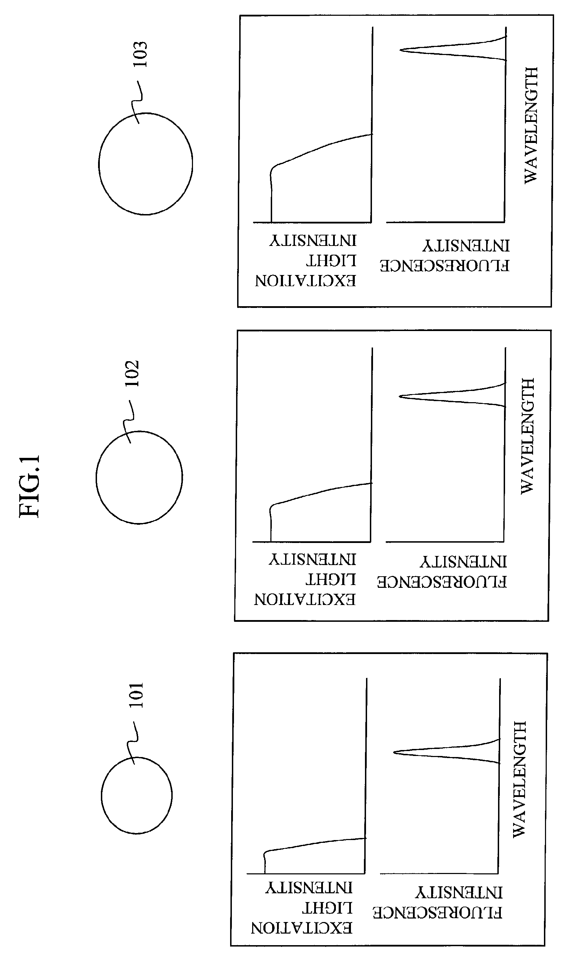

Referring to FIG. 1, the particle size, the excitation spectra, and the fluorescence spectra of the semiconductor nanoparticle will be described. It is known that when the particle size of the semiconductor nanoparticle is approximately 10 nm or smaller, it emits fluorescence by optical excitation. For example, semiconductor nanoparticles 101, 102, and 103 with a particle diameter of 4 nm, 6 nm, and 8 nm, respectively, each have an excitation spectrum and a fluorescent spectrum as schematically shown below each in the figure. In the illustrated spectrum chart, the wavelength becomes shorter as it goes towards the left side and longer as it goes towards the right side on the horizontal axis. As shown schematically in FIG. 1, the wavelengths necessary for excitation of the semiconductor nanoparticles are broadly located on the ultraviolet side. The longer-wavelength end of the excitation spectrum is shifted towards the longer-wavelength side with an increasing particle size. The fluorescent wavelength is also shifted towards the longer-wavelength side with an increasing semiconductor nanoparticle size.

Thus, the semiconductor nanoparticle has the characteristic that the fluorescent wavelength varies depending on the particle size. Accordingly, by manufacturing a plurality of kinds of semiconductor nanoparticles with different particle sizes, there can be easily obtained multiple kinds of fluorescent labeling substances with different fluorescent wavelengths. On the other hand, the excitation spectrum of the semiconductor nanoparticles exists broadly on the ultraviolet side. Thus, when a semiconductor nanoparticle is used as a fluorescent labeling substance, it is only necessary to prepare one excitation light source for producing excitation light in the ultraviolet region for a plurality of kinds of fluorescent labeling substances. Further, the semiconductor nanoparticle can be excited by the application of a voltage to emit fluorescence, in contrast to the case of organic coloring matter-based fluorescent substances.

The present invention provides a fluorescence reading apparatus in which a semiconductor nanoparticle is used as the labeling fluorescent substance, so that the apparatus can read multiple colors with the use of a single excitation light source or the application of a voltage.

In one aspect of the present invention, there is provided a fluorescence reading apparatus comprising a sample stage for retaining a sample containing a fluorescent substance, a single excitation light source for emitting light of a wavelength range including ultraviolet wavelengths, an excitation filter for blocking a part of the light emitted by the excitation light source which lies in a range of wavelengths longer than a predetermined wavelength while transmitting another part of the light which lies in a range of wavelengths shorter than the predetermined wavelength, and an imaging means for imaging, at a plurality of fluorescence wavelengths, a fluorescent image of the sample as irradiated by the light which was transmitted by the excitation filter.

In another aspect of the present invention, there is provided a fluorescence reading apparatus comprising a sample stage for retaining a sample containing a fluorescent substance, a stage drive means for driving the sample stage in two-dimensional directions, an excitation light source for emitting light of a wavelength range including ultraviolet wavelengths, an excitation filter for blocking a part of the light emitted by the excitation light source which lies in a range of wavelengths longer than a predetermined wavelength while transmitting another part of the light which lies in a range of wavelengths shorter than the predetermined wavelength, an objective lens for irradiating in a converged manner the sample with excitation light that was transmitted by the excitation filter, a plurality of photo-detectors, a wavelength selection means for limiting the light incident on each of the plurality of photo-detectors to fluorescent light of a different wavelength, and a confocal optical system for guiding fluorescence emitted from a point where the excitation light is converged by the objective lens such that the fluorescence is incident on the plurality of photo-detectors.

The excitation light source may comprise a halogen lamp or a UV laser. As the fluorescent substance, a plurality of kinds of semiconductor nanoparticles which each emit fluorescence at a different wavelength may be used.

In yet another aspect of the present invention, there is provided a fluorescence reading apparatus comprising a retaining means having on its upper surface an electrode film for retaining a sample slide comprising a transparent electrode on which a sample containing a semiconductor nanoparticle is attached, such that the transparent electrode of the sample slide is disposed opposite the electrode film, a voltage applying means for applying a voltage between the electrode film of the retaining means and the transparent electrode of the sample slide, an imaging means for detecting fluorescence emitted by the semiconductor nanoparticle within the sample in response to the application of a voltage by the voltage applying means, and a fluorescence filter disposed between the sample and the imaging means for limiting the wavelength that is incident on the imaging means.

A plurality of sets of the fluorescence filter and the imaging means may be provided, with each fluorescence filter transmitting fluorescence of a different wavelength, so that multiple-color reading can be performed on a sample containing a plurality of kinds of fluorescent substances.

In still another aspect of the present invention, there is provided a fluorescence reading apparatus comprising a sample stage, a stage drive means for driving the sample stage in two-dimensional directions, a retaining means having on its upper surface an electrode film for retaining on a sample slide comprising a transparent electrode on which a sample containing a semiconductor nanoparticle is attached, such that the transparent electrode of the sample slide is disposed opposite the electrode film, a voltage applying means for applying a voltage between the electrode film of the retaining means and the transparent electrode of the sample slide, a fluorescence filter for transmitting the fluorescence emitted by the semiconductor nanoparticle within the sample in response to the application of a voltage by the voltage applying means, and a photo-detector for detecting light transmitted by the fluorescence filter.

The semiconductor nanoparticle may comprise ZnO, ZnS, ZnSe, ZnTe, CdO, CdS, CdSe, CdTe, HgS, HgSe, HgTe, InP, InAs, GaN, GaP, GaAs, TiO₂, WO₃, PbS, PbSe, and the like.

### BRIEF DESCRIPTION OF THE DRAWINGS

FIG. 1 is an explanatory drawing of the particle size, excitation spectrum and fluorescence spectrum of a semiconductor nanoparticle;
FIG. 2 schematically shows an example of a fluorescence reading apparatus according to the present invention;
FIG. 3 schematically shows examples of a sample slide;
FIG. 4 schematically shows another example of the fluorescence reading apparatus according to the present invention;
FIG. 5 shows an enlarged view of a sample stage and sample slide portion of a voltage-excited, CCD-camera imaging-type fluorescence reading apparatus;
FIG. 6 illustrates the manner in which a semiconductor nanoparticle on a sample slide emits light by the application of voltage;
FIG. 7 schematically shows a control system of the fluorescence reading apparatus according to the present invention;
FIG. 8 shows an example of a control screen of a control computer;
FIG. 9 is an explanatory drawing of read settings;
FIG. 10 illustrates the manner in which acquired data is converted into image data;
FIG. 11 is an explanatory drawing of examples of the manner in which tools provided in a tool box are used;
FIG. 12 schematically shows another example of the fluorescence reading apparatus according to the present invention;
FIG. 13 schematically shows another example of the control system of the fluorescence reading apparatus according to the present invention;
FIG. 14 shows an example of the control screen of the control computer; and
FIG. 15 schematically shows a fluorescence reading apparatus according to the prior art.

### DETAILED DESCRIPTION OF THE PREFERRED EMBODIMENTS

The present invention will be hereafter described in detail by way of embodiments with reference made to the drawings, throughout which identical reference numerals designate elements having the same function to help better understand the present invention.

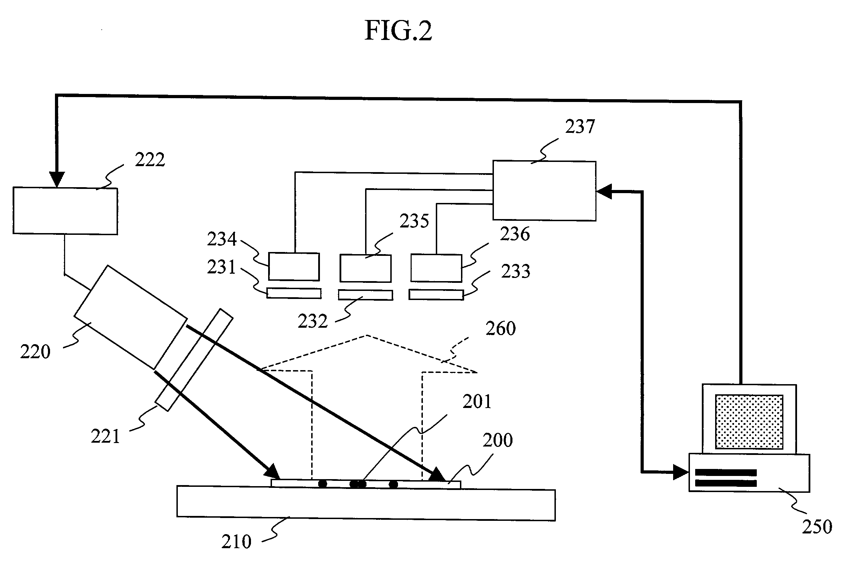

FIG. 2 schematically shows an example of a fluorescence reading apparatus according to the present invention, which is of optically excited, CCD-camera imaging type. The apparatus comprises a sample stage 210 on which a sample slide 200 with a semiconductor nanoparticle 201 is set, an ultraviolet lamp 220 as an excitation light source, an excitation optical filter 221 for transmitting light of a shorter-wavelength region and cutting light of a longer-wavelength region, a lamp controller 222 for controlling the ultraviolet lamp 220, CCD cameras 234, 235, and 236 mounted above the sample stage 210 for detecting fluorescence 260 emitted by the semiconductor nanoparticle 201, fluorescence selection filters 231, 232, and 233 mounted in front of the individual CCD cameras for transmitting individually different fluorescent wavelengths, and a CCD camera controller 237. The lamp controller 222 and CCD camera controller 237 are controlled by a control computer 250. The ultraviolet lamp 220 may comprise a mercury lamp or a halogen lamp; the latter is preferable from the viewpoint of luminance.

The ultraviolet lamp 220 emits excitation light which is transmitted by the excitation optical filter 221. A sample region of the sample slide 200 is entirely irradiated by the excitation light, and fluorescence emitted by the semiconductor nanoparticle 201 attached to the excitation light-irradiated region of the sample slide 200 is detected by the CCD cameras 234, 235, and 236 via the fluorescence selection filters 231, 232, and 233, respectively. A fluorescence image taken by the CCD cameras 234 to 236 is fed to the control computer 250 via the CCD camera controller 237 and processed as an image.

Semiconductor nanoparticles with different particle sizes emit fluorescence of different wavelengths. In the illustrated example, three kinds of semiconductor nanoparticles are used as the fluorescent substance. Three kinds of images formed by the fluorescence of different wavelengths that is emitted by the three kinds of semiconductor nanoparticles are taken by the individual CCD cameras 234, 235, and 236 via the fluorescence selection filters 231, 232, and 233, respectively.

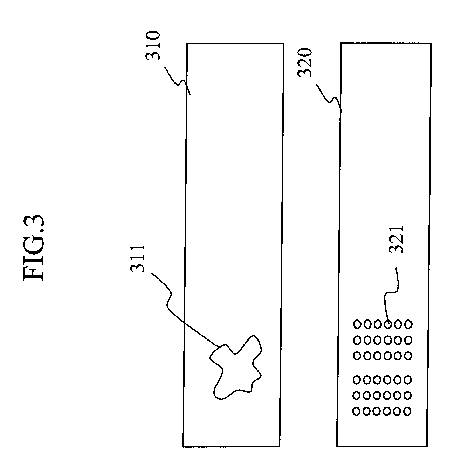

FIG. 3 schematically shows an example of the sample slide. Examples of the sample slide include a cell staining slide 310 comprising a slide glass on which a cell 311 is attached by bonding, and a biochip 320 comprising a two-dimensional array of spots 321 where a number of probe DNAs are hybridized to target DNAs. The cell 311 attached to the cell-staining slide 310 is stained by a fluorochrome comprising semiconductor nanoparticles as the fluorescent substance. The target DNAs hybridized to the probe DNAs on the biochip 320 are fluorescence-labeled by a marker comprising semiconductor nanoparticles as the fluorescent substance.

The optically excited, CCD-camera imaging-type fluorescence reading apparatus according to the present invention in which semiconductor particles are used as the fluorescent substance is capable of detecting fluorescence from multiple kinds of fluorescent labels by mounting a single ultraviolet light source as the excitation light source. Thus, the apparatus can be reduced both in size and price. Since a broad wavelength region can be used for the excitation light, the usability of the excitation light source can be increased, thus allowing a highly sensitive detection to be performed. Furthermore, because fluorescence emitted from a large area of the sample slide is simultaneously read by an imaging device such as a CCD camera, a high-speed scanning can be performed.

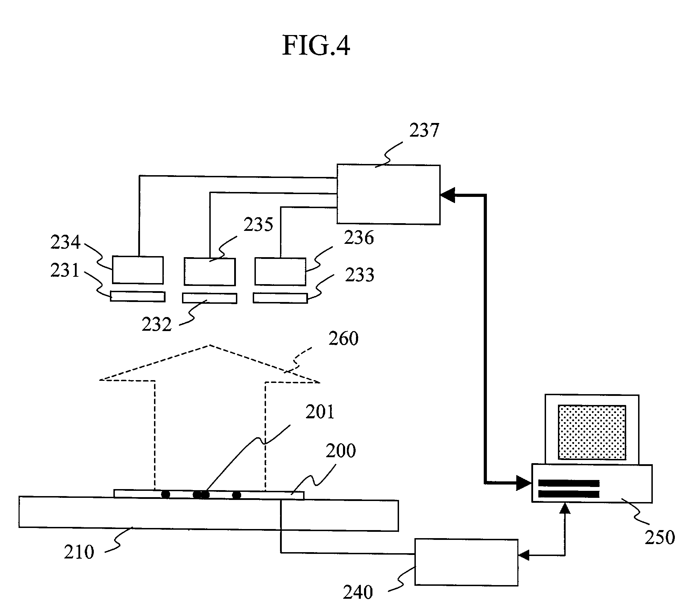

FIG. 4 schematically shows another example of the fluorescence reading apparatus according to the present invention. The fluorescence reading apparatus described here is of the voltage-excited, CCD-camera imaging type. Since the semiconductor nanoparticle 201 also emits fluorescence by the application of voltage, the fluorescence reading apparatus may be configured without the excitation light source. A sample mounting surface of the sample stage 210 on which the sample slide 200 with the semiconductor nanoparticle 201 is set is provided with an electrode, so that the control computer 250 can apply voltage to the semiconductor nanoparticle 201 on the sample slide 200 via the voltage controller 240.

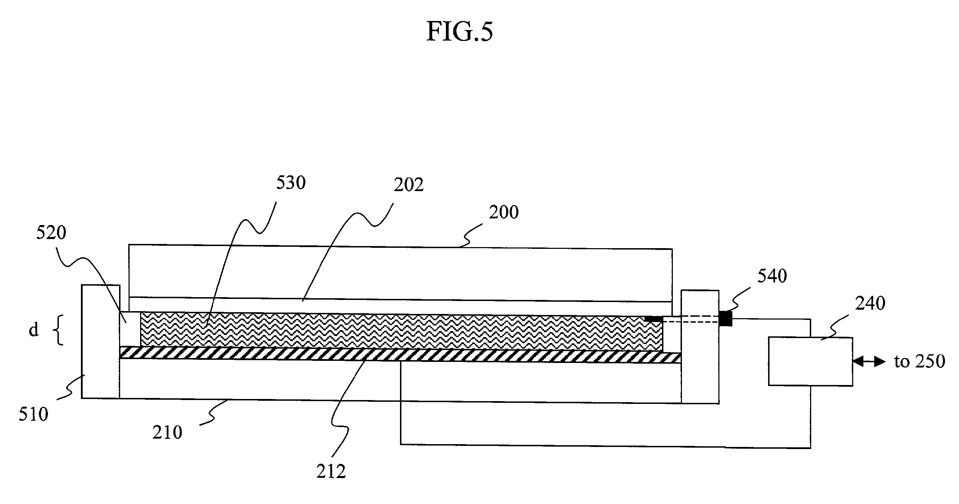

FIG. 5 shows an enlarged view of the sample-stage and sample-slide portion of the voltage-excited, CCD-camera imaging-type fluorescence reading apparatus. The sample stage 210 of the fluorescence reading apparatus is provided on its surface with an electrode film 212 such as, e.g., a graphite electrode. The sample stage 210 is enclosed by a frame 510, and a spacer 520 such as, e.g., rubber packing, is provided inside of the frame 510. The internal space enclosed by the frame 510 is supplied with an electrolytic solution 530. The sample slide 200 also comprises a transparent electrode 202 provided on its semiconductor nanoparticle-attached surface. The sample slide 200 is disposed on the sample stage 210, with its surface on the side of the transparent electrode 202 opposite the sample stage 210 and the semiconductor nanoparticle-attached surface facing downward. The space between the electrode film 212 of the sample stage 210 and the transparent electrode 202 of the sample slide 200 is filled by the electrolytic solution 530. The thickness d of the electrolytic solution is set at about 1 mm. The transparent electrode 202 of the sample slide 200 is in contact with the electrode 540 fixed on the frame 510. In this state, the control computer 250 applies a voltage between the electrode 540 and the electrode film 212 of the sample stage 210 via the voltage controller 240.

While the electrode film 212 was provided directly on the sample stage 210, and the frame 510 and the spacer 520 were built around the sample stage 210 in the above description, the electrode film 212 and the frame 510 for holding the electrolytic solution do not necessarily have to be built around the sample stage 210 as part of the fluorescence reading apparatus. For example, an adaptor with the shallow dish-like vessel structure as shown in FIG. 5 may be provided separately from the apparatus. Such adaptor may comprise a bottom plate whose at least upper surface functions as an electrode so that the electrolytic solution may be thinly retained therein. Then, the sample slide 200 may be attached to the adaptor which is then placed on the sample stage 210, so that a voltage can be applied to the semiconductor nanoparticles on the sample slide via the adaptor.

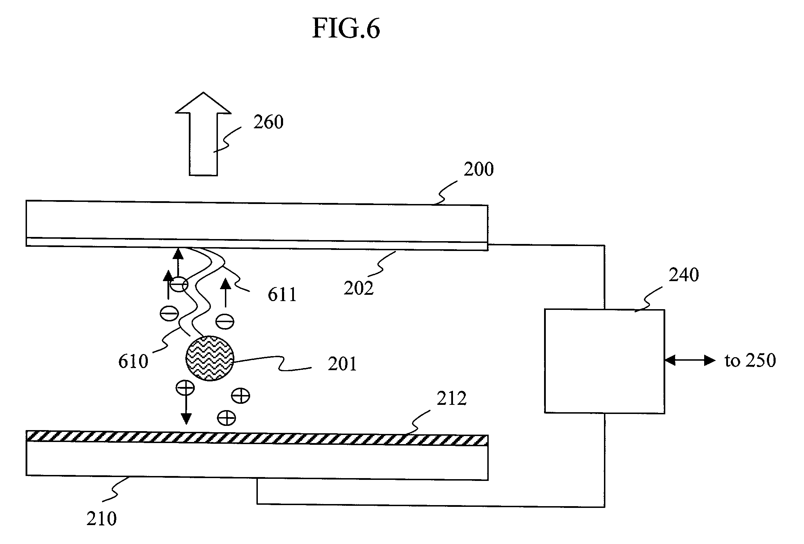

FIG. 6 schematically shows the manner in which the semiconductor nanoparticles on the sample slide emit light by the application of voltage. The semiconductor nanoparticles bonded with a biomacromolecule, or the like, are excited by flowing a DC or AC electric current in the electrolytic solution. In the case of a test using a biochip, for example, a probe DNA 610 spotted on the transparent electrode 202 of the sample slide 200 is hybridized to a target DNA bonded with the semiconductor nanoparticle 201 as the labeling fluorescent substance. When the probe DNA 610 and the target DNA 611 are in a complementary relationship, they hybridize as shown in FIG. 6, whereby the semiconductor nanoparticle 201 is taken into a probe spot region of the sample slide 200. After hybridization, the voltage controller 240 applies a voltage to the electrolytic solution containing the semiconductor nanoparticles where a salt solution is used as the electrolytic solution. Semiconductor nanoparticles of differing particle sizes emit fluorescence of respectively differing wavelengths. The fluorescence 260 emitted by the semiconductor nanoparticle 201 is transmitted by the transparent electrode 202 and the sample slide 200, discriminated by the fluorescence selection filters 231, 232, and 233 that are disposed above the sample stage and that transmit different wavelengths, and detected by the CCD cameras 234, 235, and 236.

Since the voltage-excited, CCD-camera imaging-type fluorescence reading apparatus according to the present invention in which semiconductor nanoparticles are used as the fluorescent substance requires no excitation light source, the apparatus can be reduced in size and price. Further, because the fluorescence emitted from a large area of the sample slide is simultaneously read by an imaging device such as a CCD camera, a high-speed scan is enabled. Moreover, because the excitation is effected only by the application of a voltage, background can be drastically reduced as compared with the case of optical excitation.

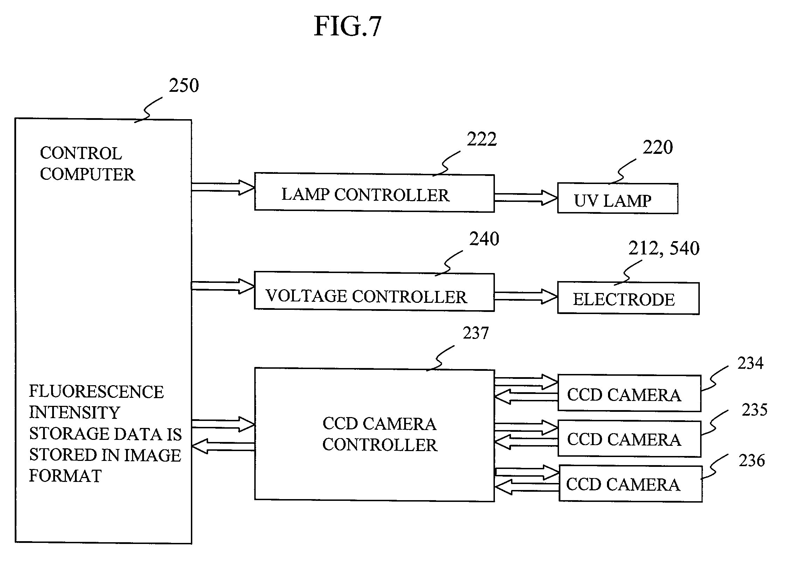

FIG. 7 schematically shows a control system of the optically excited, CCD-camera imaging-type fluorescence reading apparatus and voltage-excited, CCD-camera imaging type fluorescence reading apparatus according to the present invention. The control computer 250 controls the intensity of the ultraviolet lamp 220 via the lamp controller 222, and controls the voltage and voltage waveform to be applied across the electrodes 212 and 540 via the voltage controller 240. The control computer 250 also controls the CCD cameras 234, 235, and 236 via the CCD camera controller 237, while capturing an image taken by the CCD cameras. The figure shows the control system of a fluorescence reading apparatus equipped with an electrode as well as an ultraviolet lamp which is capable of selecting between optical excitation and voltage excitation as the excitation method. However, in the case of an optical excitation-dedicated apparatus, the voltage controller 240 and the electrodes 212 and 540 are omitted. On the other hand, in the case of a voltage excitation-dedicated apparatus, the lamp controller 222 and the ultraviolet lamp 220 are omitted.

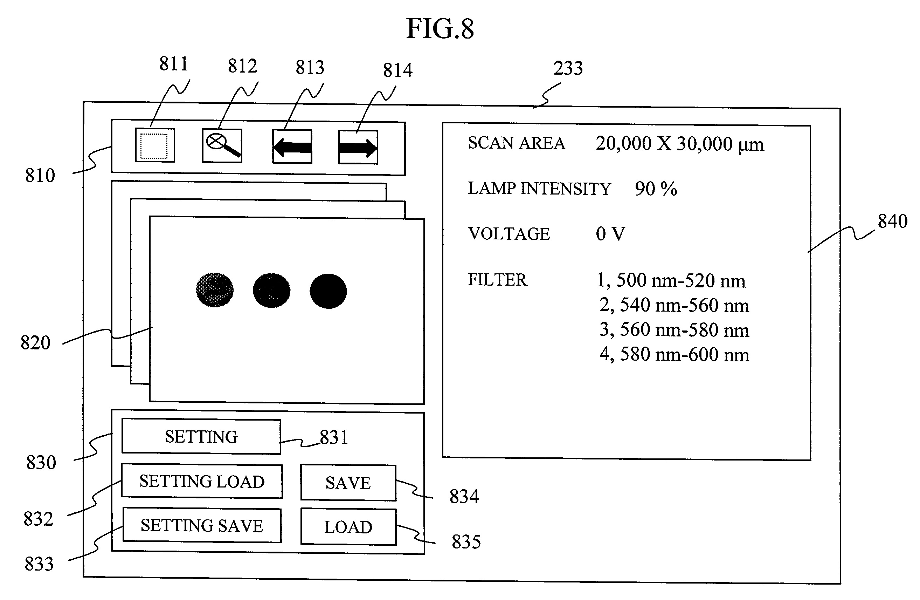

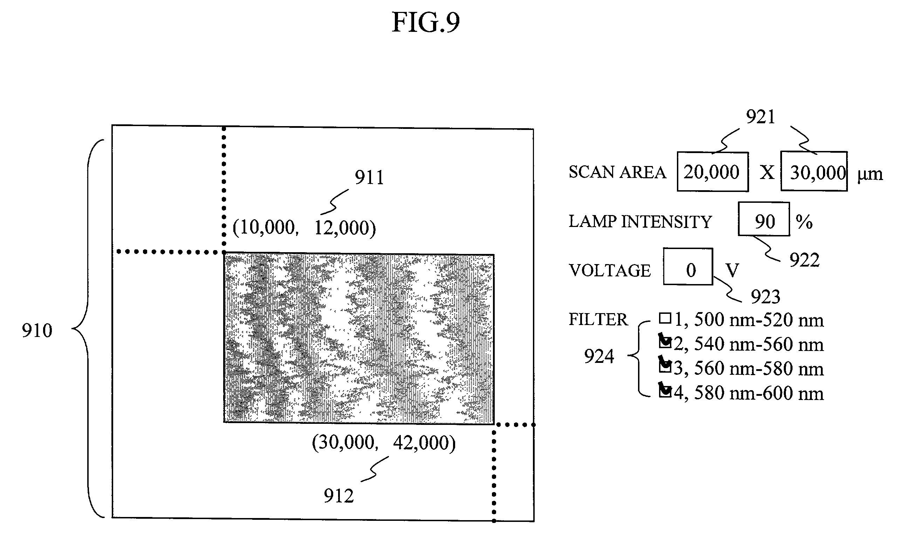

FIG. 8 shows an example of a control screen of the control computer. The control screen shows a tool box 810 with a variety of tools, an image display portion 820 for displaying an image that has been read, a setting box 830 for setting the reading position, light source intensity, etc., and a setting table 840 for displaying setting conditions. The tool box 810 in the illustrated example includes an area designation tool 811, a magnifying glass tool 812, and image switchover tools 813 and 814. These tools are used for performing various processes on the image displayed on the image display portion 820, such as designating an area and enlarging. The setting box 830 shows a setting screen button 831, a setting load button 832, a setting save button 833, an image save button 834, and an image load button 835. The setting screen button 831 is used for moving onto a read setting shown in FIG. 9. The setting load button 832 is used for recalling a saved read setting. The setting save button 833 is used for storing the read setting shown in FIG. 9. The image save button 834 is used for storing an image that has been read. And the image load button 835 is used for capturing image data that is stored. The setting table 840 shows conditions such as, e.g., a sample reading area as set by the setting box 830, an output intensity of the ultraviolet lamp, a voltage value for voltage excitation, and a transmission wavelength range of the fluorescence filter.

FIG. 9 illustrates the read setting. As the setting button 831 in the setting box 830 is pushed, a setting screen shown in FIG. 9 is displayed. By using this setting screen, various read-related settings can be made. The area to be scanned on the sample stage 210 can be set by a scan execution area setting box 921. The scan area is determined by designating two points in an entire scan area 910, i.e., upper-left coordinates 911 and lower-right coordinates 912. The intensity of the ultraviolet lamp 220 can be set by a box 922 for the setting of intensity of the excitation light source. The voltage can be set by an excitation voltage-setting box 923. By checkmarking a box 924 for the selection of a filter to be used, the user can freely choose a fluorescent filter to be used for measurement from the filters provided in the apparatus.

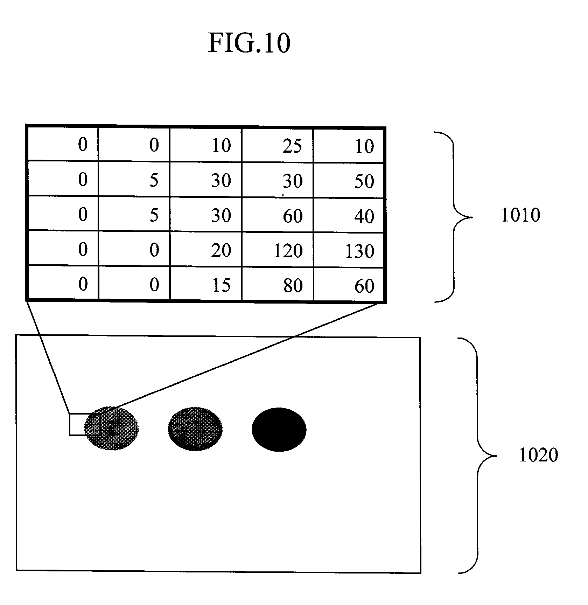

FIG. 10 illustrates the conversion of data obtained by the CCD cameras into image data. An image signal obtained by the CCD cameras 234 to 236 is sent to the control computer 250 as a digital signal via the CCD camera controller 237. In the case where the digital signal that has been sent has eight bits, the signal is stored in the form of a read result 1010, as shown. When this is displayed as a gray scale image, an image 1020 is displayed. When a scan was performed by using a plurality of fluorescence filters, a plurality of images are displayed in the image display portion 820 of FIG. 8.

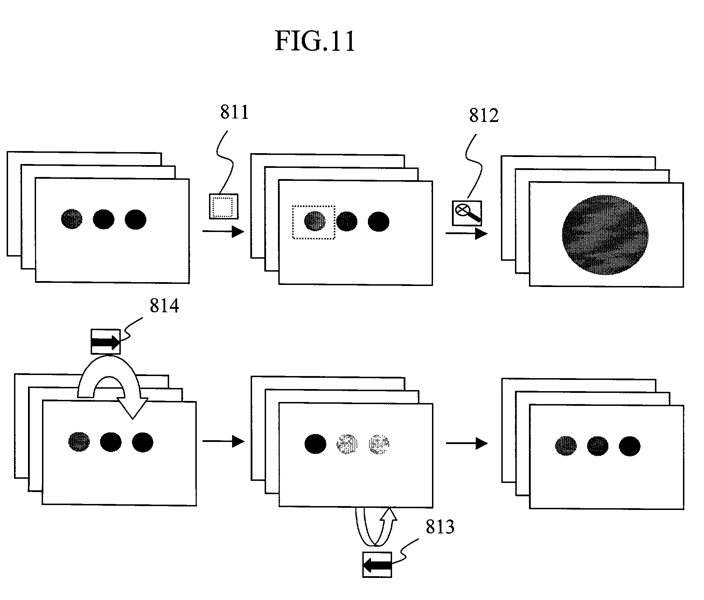

By referring to FIG. 11, examples of the use of the tools provided in the tool box 810 of FIG. 8 will be described. After designating an area by enclosing a part of a scanned image with the area designation tool 811, the area-designated portion can be displayed in an enlarged form by using the magnifying glass tool 812. When the scan was performed using a plurality of fluorescence filters, a plurality of images are displayed. The display of the plurality of images can be switched back to a previous image by using the image switchover tool 813, and switched forward to a later image by using the image switchover tool 814.

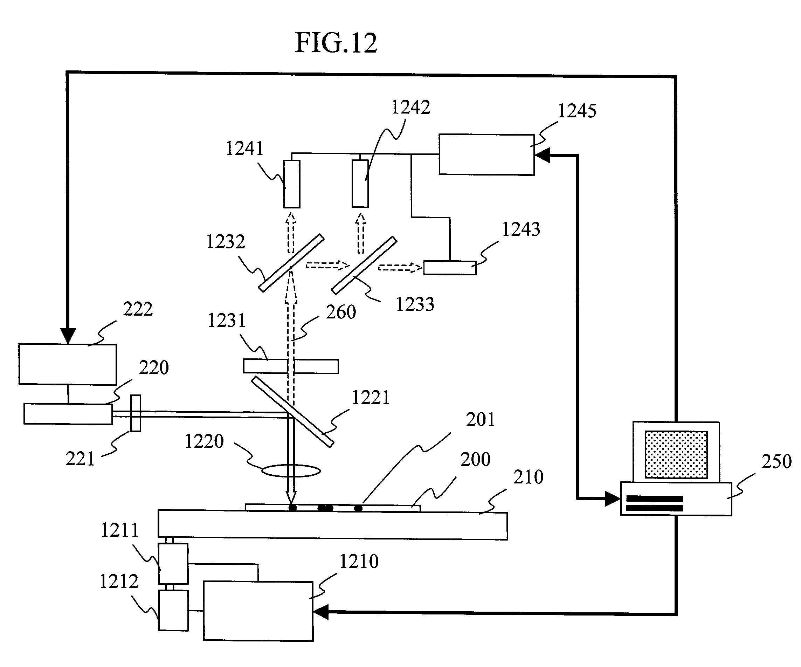

FIG. 12 schematically shows another example of the fluorescence reading apparatus according to the present invention. In the description of the fluorescence reading apparatus up to this point, the semiconductor nanoparticles distributed over a wide area of the sample slide were simultaneously excited by the irradiation of light or application of a voltage, and all of the resultant fluorescence was detected by means of an imaging device such as a CCD camera as one batch. The present example, however, is based on an optically excited, confocal-detection type fluorescence reading apparatus in which the semiconductor nanoparticles contained in a small region on the sample slide are selectively excited by irradiating the region with excitation light, and the emitted fluorescence is detected by a confocal optical system. The entirety of the sample slide is read on a sequential, minute-region-by-minute-region basis by transporting the sample stage two dimensionally.

The sample slide 200 with the semiconductor nanoparticle 201 is set on the sample stage 210. The sample stage 210 is transported to an arbitrary position by an X-axis control motor 1211 and a Y-axis control motor 1212 which are driven by a motor control unit 1210 under the control of the control computer 250. An ultraviolet ray emitted by the ultraviolet lamp 220 which is controlled by the lamp controller 222 under the control of the control computer 250 passes through the excitation optical filter 221 which transmits light of a shorter wavelength region and cuts off light of a longer wavelength region. The ultraviolet ray is further reflected downward by a dichroic mirror 1221 and then converged by an objective lens 1220 into a minute region on the sample slide 200. The dichroic mirror 1221 reflects the excitation wavelength and transmits the fluorescence wavelengths.

The semiconductor nanoparticles excited by the ultraviolet ray irradiation emit fluorescence of wavelengths which differ depending on their particle size. Fluorescence 260 emitted by the semiconductor nanoparticles passes through the dichroic mirror 1221, and a confocal pinhole 1231 provided at a position which is conjugate to the convergence point of the objective lens 1220 on the sample slide 200. The fluorescence 260 is then transmitted or reflected by dichroic mirrors 1232 and 1233 for the wavelength separation, and detected by photomultiplier tubes 1241, 1242, and 1243. To read a plurality of fluorescence wavelengths simultaneously, there are provided a plurality of photomultiplier tubes as shown in the illustrated example, or there is provided a multi-anode photomultiplier tube unit. A signal detected by the photomultiplier tubes 1241, 1242, and 1243 is converted into a digital signal by a photomultiplier tube controller 1245, sent to the control computer 250, and stored as data.

The optically excited, confocal detection-type fluorescence reading apparatus according to the present invention in which semiconductor nanoparticles are used as the fluorescent substance is capable of detecting fluorescence from a plurality of kinds of fluorescence labels by mounting a single ultraviolet light source as the excitation light source. Thus the apparatus can be reduced both in size and price. Since a broad wavelength band can be used for the excitation light, the usability of the excitation light source can be increased, thus allowing a highly sensitive detection to be performed. Alternatively, an ultraviolet laser may be used instead of the ultraviolet lamp. In this case, too, fluorescence from a plurality of kinds of fluorescence labels can be detected by mounting a single ultraviolet laser.

Further, as another type of fluorescence reading apparatus according to the present invention, a voltage-excited, confocal detection-type fluorescence reading apparatus may be configured using voltage excitation instead of optical excitation and performing the fluorescence detection by a confocal optical system. In this case, the ultraviolet lamp 220 as the semiconductor nanoparticle excitation portion in the apparatus structure shown in FIG. 12 is replaced by a voltage excitation portion as described with reference to FIGs. 4-6.

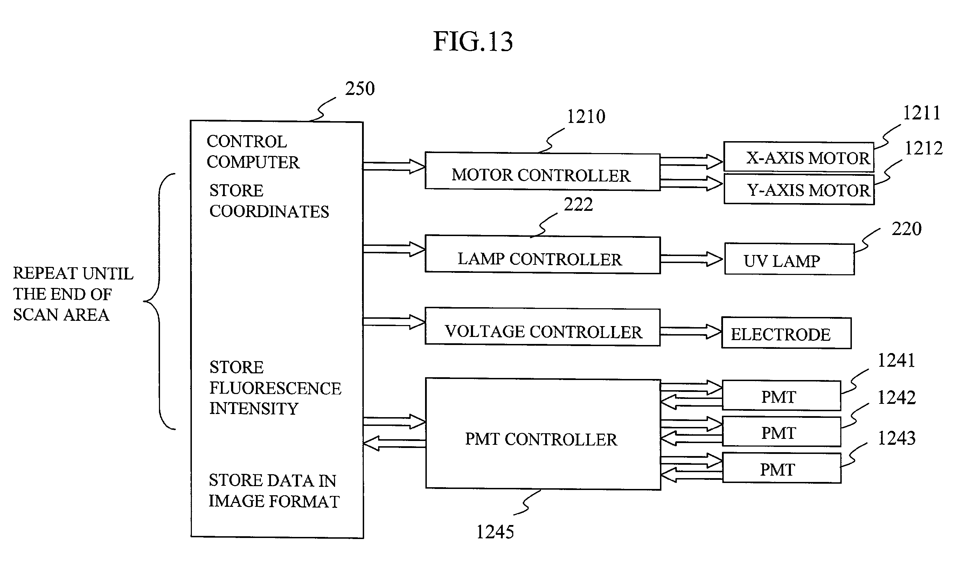

FIG. 13 schematically shows a control system of the optically excited, confocal detection-type fluorescence reading apparatus and voltage-excited, confocal detection-type fluorescence reading apparatus. The control computer 250 controls the intensity of the ultraviolet lamp 220 via the lamp controller 222, and controls via the voltage controller the voltage and voltage waveform to be applied to the semiconductor nanoparticles. The X-axis motor 1211 and Y-axis motor 1212 are controlled by the motor controller 1210 such that the sample stage is two-dimensionally transported, while controlling the plurality of photomultiplier tubes 1241, 1242, and 1243 via the photomultiplier tube controller 1245, and a detected signal is captured. The control computer 250 stores in an image format data about the measured wavelengths based on the digital signal supplied from the photomultiplier tube controller 1245 and the information about the fluorescence detection coordinates. The figure shows the control system of a fluorescence reading apparatus equipped with an electrode as well as an ultraviolet lamp which allows the selection of the excitation method between optical excitation and voltage excitation. However, in the case of an optical excitation-dedicated apparatus, the voltage controller and the electrode are omitted, while in the case of a voltage excitation-dedicated apparatus, the lamp controller 222 and the ultraviolet lamp 220 are omitted.

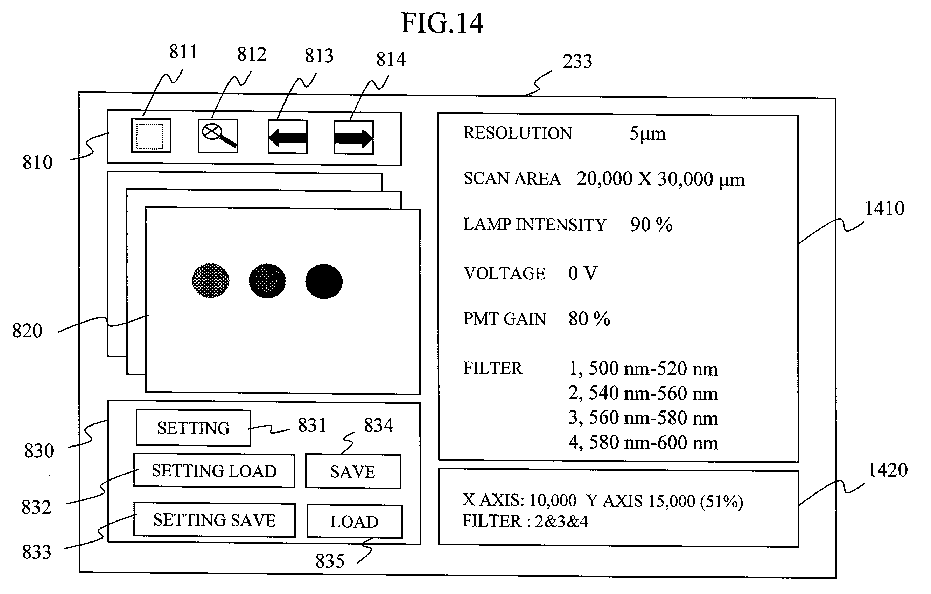

FIG. 14 shows an example of a control screen of the control computer in the optically excited, confocal detection-type fluorescence reading apparatus and the voltage-excited, confocal detection-type fluorescence reading apparatus. This control screen differs from that of the optically excited, CCD-camera imaging-type fluorescence reading apparatus and the voltage-excited, CCD-camera imaging-type fluorescence reading apparatus as described with reference to FIG. 8 in that a setting table 1410 for displaying setting conditions displays set values of resolving power and photomultiplier tubes' gain, and also in that there is displayed a scan progress situation 1420. The resolving power concerns the setting of scan resolution and can be set by means of a setting box 830. Based on the resolution setting, the control computer 250 transports the stage along X- and Y-axes on a stepwise, unit-resolution basis, such that the fluorescence from a designated area on the sample slide can be measured. The scan progress situation 1420 displays the current scan progress situation as the stage is transported, so that it can be known how much of the entire scanning has been completed in percentage terms.

Thus, the present invention can provide a compact, low-cost fluorescence reading apparatus capable of easily measuring multi-color fluorescence.

## Claims

1. A fluorescence reading apparatus comprising:
a sample stage for retaining a sample containing a fluorescent substance;
a single excitation light source for emitting light of a wavelength range including ultraviolet wavelengths;
an excitation filter for blocking a part of the light emitted by the excitation light source which lies in a range of wavelengths longer than a predetermined wavelength while transmitting another part of the light which lies in a range of wavelengths shorter than the predetermined wavelength; and
an imaging means for imaging, at a plurality of fluorescence wavelengths, a fluorescent image of the sample as irradiated by the light which was transmitted by the excitation filter.

2. A fluorescence reading apparatus comprising:
a sample stage for retaining a sample containing a fluorescent substance;
a stage drive means for driving the sample stage in two-dimensional directions;
an excitation light source for emitting light of a wavelength range including ultraviolet wavelengths;
an excitation filter for blocking a part of the light emitted by the excitation light source which lies in a range of wavelengths longer than a predetermined wavelength while transmitting another part of the light which lies in a range of wavelengths shorter than the predetermined wavelength;
an objective lens for irradiating in a converged manner the sample with excitation light that was transmitted by the excitation filter;
a plurality of photo-detectors;
a wavelength selection means for limiting the light incident on each of the plurality of photo-detectors to fluorescent light of a different wavelength; and
a confocal optical system for guiding fluorescence emitted from a point where the excitation light is converged by the objective lens such that the fluorescence is incident on the plurality of photo-detectors.

3. A fluorescence reading apparatus according to claim 1 or 2, wherein a halogen lamp or a UV laser is used as the excitation light source.

4. A fluorescence reading apparatus according to claim 1, 2, or 3, wherein the fluorescent substance comprises a plurality of kinds of semiconductor nanoparticles, each kind of semiconductor nanoparticle emitting fluorescence of a different wavelength.

5. A fluorescence reading apparatus comprising:
a retaining means having on its upper surface an electrode film for retaining a sample slide comprising a transparent electrode on which a sample containing a semiconductor nanoparticle is attached, such that the transparent electrode of the sample slide is disposed opposite the electrode film;
a voltage applying means for applying a voltage between the electrode film of the retaining means and the transparent electrode of the sample slide;
an imaging means for detecting fluorescence emitted by the semiconductor nanoparticle within the sample in response to the application of a voltage by the voltage applying means; and
a fluorescence filter disposed between the sample and the imaging means for limiting the wavelength that is incident on the imaging means.

6. A fluorescence reading apparatus according to claim 5, wherein there are provided a plurality of sets of the fluorescence filter and the imaging means, each fluorescence filter transmitting fluorescence of a different wavelength.

7. A fluorescence reading apparatus comprising:
a sample stage;
a stage drive means for driving the sample stage in two-dimensional directions;
a retaining means having on its upper surface an electrode film for retaining a sample slide comprising a transparent electrode on which a sample containing a semiconductor nanoparticle is attached, such that the transparent electrode of the sample slide is disposed opposite the electrode film;
a voltage applying means for applying a voltage between the electrode film of the retaining means and the transparent electrode of the sample slide;
a fluorescence filter for transmitting the fluorescence emitted by the semiconductor nanoparticle within the sample in response to the application of a voltage by the voltage applying means; and
a photo-detector for detecting light transmitted by the fluorescence filter.
